# FASCICULE DE BREVET EUROPEEN

(11) **EP 3 087 879 B1**
(45) Date de publication et mention de la délivrance du brevet: **07.03.2018**
(21) Numéro de dépôt: 16165659.0
(22) Date de dépôt: 15.04.2016
(51) Int. Cl.: A47J 43/046, A47J 36/38, A47J 27/00, A47J 27/04, A47J 43/07

(54) **ACCESSOIRE POUR LA CUISSON À LA VAPEUR COMPORTANT UN BAC DE RÉCUPÉRATION DES CONDENSATS DESTINÉ À REPOSER SUR UN BOL DE MIXAGE D'UN APPAREIL ÉLECTROMÉNAGER**
ZUBEHÖRTEIL ZUM DAMPFGAREN, DAS EINEN AUFFANGBEHÄLTER FÜR KONDENSWASSER UMFASST, DER AUF EINE MIXSCHÜSSEL EINES ELEKTROHAUSHALTSGERÄTS AUFGESETZT WIRD
STEAM-COOKING ACCESSORY COMPRISING A PAN FOR RECOVERING CONDENSATES INTENDED FOR RESTING ON A MIXING BOWL OF A HOUSEHOLD APPLIANCE

(30) Priorité: 28.04.2015 FR 1553835
(43) Date de publication de la demande: 02.11.2016
(73) Titulaire: SEB S.A., 69130 Ecully (FR)
(72) Inventeur: GERARD, Emmanuel, 61410 COUTERNE (FR); NESPOUX, Johan, 53470 CHALONS-DU-MAINE (FR)
(74) Mandataire: Bourrières, Patrice

(56) Documents cités:
- EP-A1- 2 042 060
- DE-A1-102012 004 336

## Description

La présente invention se rapporte au domaine technique général des accessoires pour la cuisson à la vapeur comportant un bac de récupération des condensats destiné à reposer sur un bol de mixage d'un appareil électroménager de préparation culinaire comportant des moyens permettant de chauffer le contenu du bol de mixage, et se rapporte plus particulièrement à un accessoire dans lequel le bac comprend une cavité pour la récupération des condensats et deux poignées de préhension disposées symétriquement de part et d'autre de la cavité, la cavité comprenant un fond comportant une cheminée en saillie comprenant un orifice central permettant le passage de la vapeur.

Il est connu, de la demande de brevet EP 2 042 060, un appareil de préparation culinaire comportant un récipient chauffant et un accessoire pour la cuisson à la vapeur comportant un bac pour la récupération des condensats destiné à reposer sur le bol de mixage et un panier pour la cuisson des aliments venant se positionner sur le bac. Dans ce document, le bac comprend une cavité pour la récupération des condensats et deux poignées de préhension disposées symétriquement de part et d'autre de la cavité. La cavité comprend une cheminée en saillie qui permet le passage de la vapeur du bol de mixage vers le panier pour la cuisson des aliments, les condensats se formant lors du refroidissement de la vapeur dans le panier retombant par gravité dans la cavité du bac, évitant ainsi que les condensats ne tombent dans le bol de mixage.

Toutefois, la manipulation d'un tel bac muni d'une cavité pour la récupération des condensats présente l'inconvénient d'être particulièrement délicate à la fin de la cuisson, le liquide recueilli dans la cavité ayant tendance à se déplacer en générant des vagues à l'intérieur de la cavité lorsque l'utilisateur saisit le bac par les poignées pour le retirer du bol de mixage. Il s'ensuit un risque important de débordement du liquide au travers de la cheminée lors de la manipulation du bac. Un tel débordement s'accompagne alors d'un écoulement de liquide qui peut venir au contact de l'utilisateur, avec un risque important de brûlure si l'utilisateur manipule le bac dès la fin de la cuisson, c'est-à-dire sans attendre le refroidissement des condensats.

Aussi, un but de la présente invention est de remédier à ces inconvénients en proposant un accessoire pour la cuisson vapeur destiné à équiper un appareil électroménager de préparation culinaire comportant des moyens pour chauffer le contenu d'un bol de mixage dans lequel la manipulation du bac pour la récupération des condensats est rendue moins dangereuse, procurant ainsi une meilleure ergonomie d'utilisation.

A cet effet, l'invention se rapporte à un accessoire pour la cuisson à la vapeur comportant un bac de récupération des condensats destiné à reposer sur un bol de mixage d'un appareil électroménager comportant des moyens permettant de chauffer le contenu du bol de mixage, le bac comprenant une cavité pour la récupération des condensats et deux poignées de préhension disposées symétriquement de part et d'autre de la cavité, la cavité comprenant un fond comportant une cheminée en saillie munie d'un orifice central permettant le passage de la vapeur, l'accessoire comprenant également au moins un panier pour la cuisson des aliments venant se positionner sur le bac, caractérisé en ce que la cheminée comporte, à proximité de son extrémité supérieure, une paroi annulaire s'étendant autour de l'orifice central et transversalement à la cheminée, et en ce que la cheminée comporte, en regard de chaque poignée de préhension, une paroi déflectrice s'élevant au dessus du niveau de la paroi annulaire.

Une telle paroi déflectrice présente l'avantage de réduire la quantité de condensats passant vers l'orifice central de la cheminée lors du transport de l'accessoire. En effet, la paroi déflectrice, qui surélève le bord de la cheminée en regard des poignées de préhension du bac, agit comme une digue qui s'oppose au passage du liquide.

Selon une autre caractéristique de l'invention, la cheminée comporte un cache venant recouvrir au moins partiellement l'orifice central, le cache étant supporté par des pieds ménageant entre eux des ouvertures radiales pour le passage de la vapeur.

Une telle caractéristique permet d'obtenir une diffusion radiale et homogène de la vapeur sous le panier pour une cuisson plus homogène des aliments.

Selon une autre caractéristique de l'invention, la paroi déflectrice s'étend le long du pourtour de la cheminée sur un secteur angulaire α d'au moins 130°.

Une telle caractéristique permet d'obtenir une couverture angulaire de la paroi déflectrice suffisante pour limiter fortement les infiltrations de liquide à l'intérieur de la cheminée, la paroi déflectrice étant avantageusement centrée sur l'axe longitudinal du bac. Par axe longitudinal du bac, on entend l'axe du bac passant par les deux poignées de préhension.

Selon une autre caractéristique de l'invention, la paroi déflectrice est disposée dans le prolongement vertical de la paroi cylindrique.

Une telle caractéristique permet d'avoir une parfaite intégration visuelle de la paroi déflectrice sur la cheminée.

Selon une autre caractéristique de l'invention, la paroi déflectrice dépasse d'au moins 3 mm de la surface supérieure de la paroi annulaire et préférentiellement de l'ordre de 5 mm.

Selon encore une autre caractéristique de l'invention, il résulte entre les parois déflectrices au moins un passage permettant d'évacuer l'eau présente sur la surface supérieure de la paroi annulaire vers la cavité.

Une telle caractéristique permet de réintroduire dans la cavité tout éventuel liquide parvenant à passer au-dessus de la paroi déflectrice et s'écoulant sur la paroi annulaire le long de la paroi déflectrice.

Selon une autre caractéristique de l'invention, le passage est disposé sur un axe passant par le centre de la cheminée et s'étendant perpendiculairement à un axe longitudinal passant par les deux poignées de préhension.

Selon encore une autre caractéristique de l'invention, la cheminée comprend deux passages disposés symétriquement entres les parois déflectrices.

Une telle caractéristique permet d'optimiser le retour des condensats vers la cavité.

Selon une autre caractéristique de l'invention, le bac comprend au moins une cloison de séparation qui s'étend transversalement dans la cavité pour faire barrage au déplacement du liquide dans la cavité.

Une telle caractéristique permet de réduire la quantité de liquide se déplaçant d'une extrémité longitudinale à l'autre de la cavité lors du déplacement du bac par l'utilisateur.

Selon une autre caractéristique de l'invention, les poignées de préhension du bac comprennent une surface inférieure comportant plusieurs nervures en relief séparées les unes des autres par une pellicule d'air.

Une telle caractéristique permet de diminuer fortement la température de la poignée de préhension au niveau de la zone de contact avec la main.

L'invention se rapporte également à un accessoire pour la cuisson à la vapeur comportant un bac de récupération des condensats destiné à reposer sur un bol de mixage d'un appareil électroménager comportant des moyens permettant de chauffer le contenu du bol de mixage, le bac comprenant au moins une poignée de préhension, caractérisé en ce que la poignée de préhension comprend une surface inférieure comportant plusieurs nervures en relief séparées les unes des autres par une pellicule d'air.

L'invention se rapporte également à un appareil électroménager de préparation culinaire comportant un bol de mixage recevant un outil de travail entrainé en rotation par un moteur et comprenant un dispositif de chauffage permettant de chauffer le contenu du bol de mixage, caractérisé en ce qu'il comporte un accessoire pour la cuisson à la vapeur tel que précédemment décrit.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective d'un appareil de préparation culinaire muni d'un accessoire pour la cuisson à la vapeur selon un mode particulier de réalisation de l'invention,
- la figure 2 est une vue en perspective de l'appareil de la figure 1 avec l'accessoire pour la cuisson à la vapeur soulevé du bol de mixage ;
- la figure 3 est une vue en perspective éclatée de l'accessoire surmontant le couvercle du bol de mixage de l'appareil de la figure 1 ;
- la figure 4 est une vue en coupe longitudinale du couvercle du bol de mixage de l'appareil de la figure 1 surmonté du bac pour la récupération des condensats de l'accessoire ;
- la figure 5 est une vue en coupe transversale du couvercle du bol de mixage de l'appareil de la figure 1 surmonté du bac et du panier de cuisson de l'accessoire ;
- les figures 6 et 7 sont des vues en perspective du bac pour la récupération des condensats représenté seul ;
- la figure 8 est une vue de dessus du bac pour la récupération des condensats.

Seuls les éléments nécessaires à la compréhension de l'invention ont été représentés. Pour faciliter la lecture des dessins, les mêmes éléments portent les mêmes références d'une figure à l'autre.

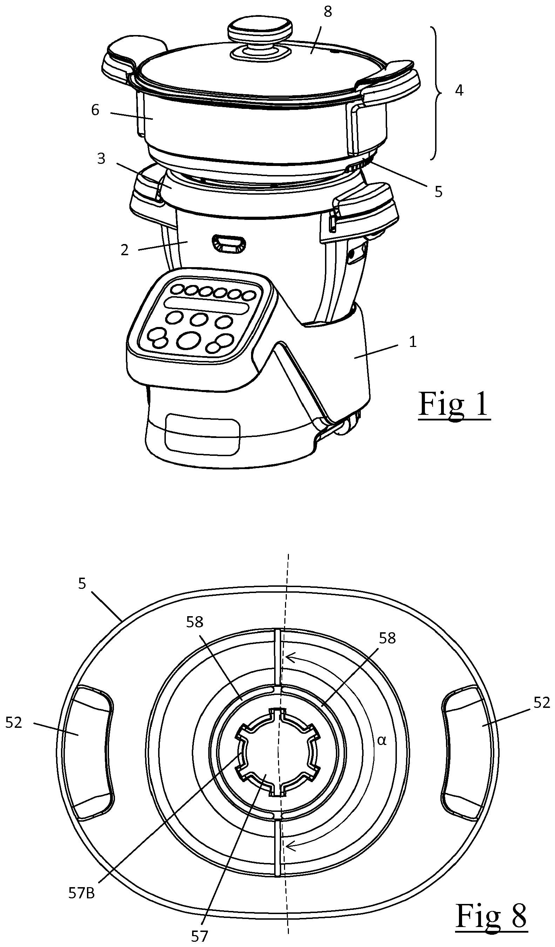

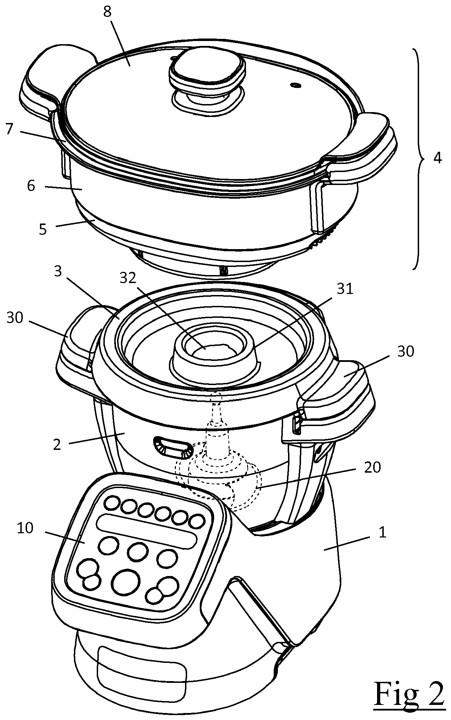

Les figures 1 et 2 représentent un appareil de préparation culinaire comportant un boîtier 1 et un bol de mixage 2 reposant de manière amovible sur le boîtier 1, le bol de mixage 2 comportant une enveloppe cylindrique, munie d'une extrémité supérieure ouverte par laquelle les ingrédients peuvent être introduits dans le bol de mixage 2, cette extrémité supérieure ouverte étant fermée par un couvercle 3 amovible, de forme générale circulaire, sur lequel peut venir reposer un accessoire 4 pour la cuisson à la vapeur.

Le boîtier 1, décrit plus en détails dans la demande de brevet FR2998773 déposée par la demanderesse, renferme de manière connue en soi un moteur électrique, non visible sur les figures, permettant l'entrainement en rotation d'un outil de travail 20 dans le bol de mixage 2 et comporte une résistance, non visible, permettant de chauffer le contenu du bol de mixage 2.

La résistance et le moteur sont pilotés, de manière connue en soi, par une carte électronique disposée sous un panneau de commande 10 présent sur le boîtier 1, cette carte électronique recevant la valeur de la température mesurée par un palpeur de température et assurant la régulation de l'alimentation de la résistance de façon à amener le contenu du bol de mixage 2 à une température de consigne.

Comme on peut le voir sur la figure 2, le couvercle 3 est équipé de deux poignées de préhension 30 disposées à l'opposée l'une de l'autre et comporte en son centre une couronne 31 en saillie comprenant une ouverture 32 centrale communiquant directement avec l'intérieur du bol de mixage 2, l'ouverture 32 formant également un logement de réception pour un bouchon doseur, non représenté sur les figures, lorsque l'accessoire 4 n'est pas utilisé.

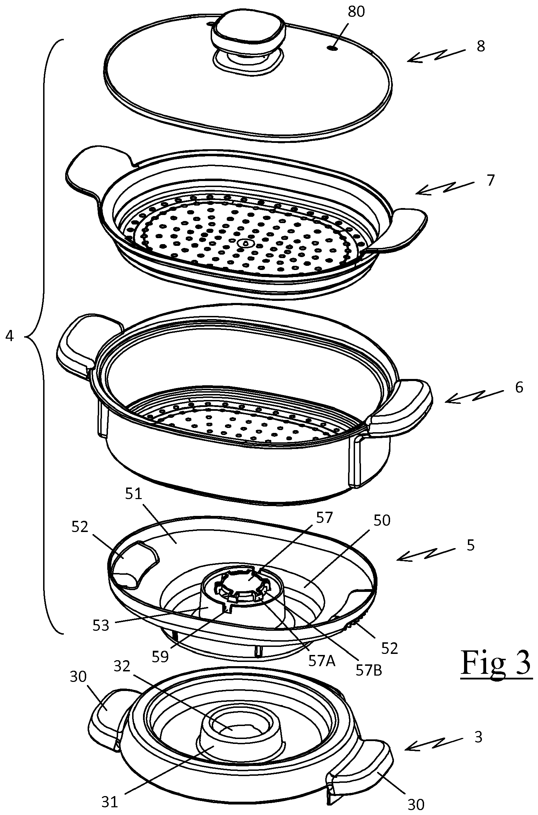

Conformément aux figures 2 et 3, l'accessoire 4 pour la cuisson à la vapeur comporte un bac 5 pour la récupération des condensats venant reposer directement sur le couvercle 3 du bol de mixage 2, un panier 6 pour la cuisson des aliments venant reposer sur le bac 5, un plateau 7 de cuisson destiné à venir reposer sur le panier 6 pour fournir un deuxième étage de cuisson, et un couvercle de fermeture 8, avantageusement en verre, venant reposer sur le plateau 7 ou directement sur le panier 6.

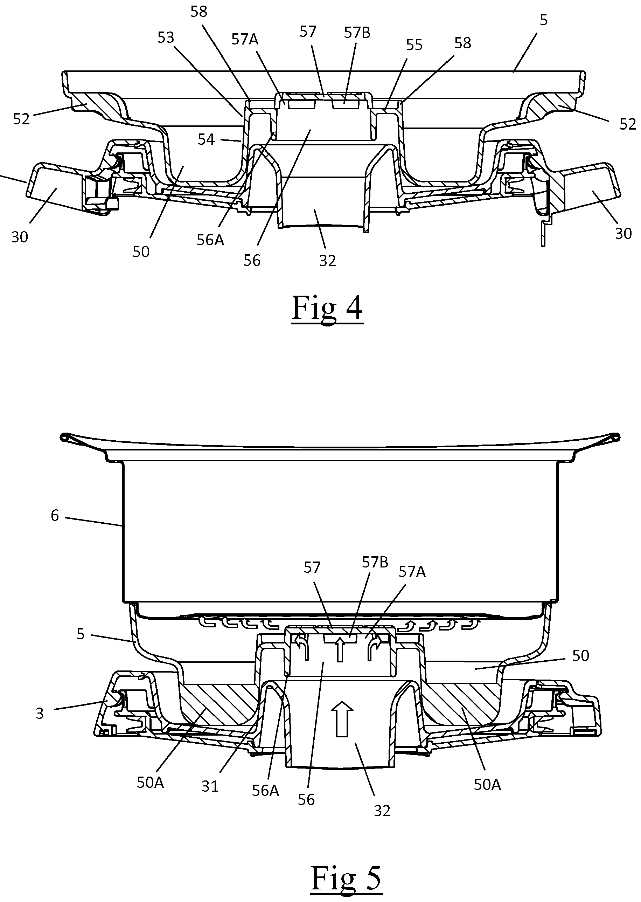

Comme on peut le voir sur les figures 4 à 8, le bac 5 présente une forme générale allongée et comporte en son centre une cavité 50 pour la récupération des condensats qui est bordée d'une paroi collectrice 51 inclinée en direction de la cavité 50, le bac 5 comprenant une poignée de préhension 52 à chacune de ses extrémités longitudinales.

La cavité 50 comporte un fond présentant en son centre une cheminée 53 en saillie, présentant avantageusement un diamètre intérieur de l'ordre de 8 cm, dans laquelle la couronne 31 du couvercle 3 vient s'engager lorsque le bac 5 repose sur le couvercle 3.

De manière préférentielle, le diamètre externe de la couronne 31 du couvercle 3 est légèrement inférieur au diamètre intérieur de la cheminée 53 de manière à ce que la couronne 31 du couvercle 3 s'engage à l'intérieur de la cheminée 53 en assurant un centrage du bac 5 sur le couvercle 3.

La cheminée 53 comprend une paroi cylindrique 54, de section circulaire, qui s'étend sensiblement verticalement depuis le fond de la cavité 50, sur une hauteur de l'ordre de 4 cm, et qui comporte une extrémité supérieure au niveau de laquelle s'étend transversalement une paroi annulaire 55 venant fermer partiellement l'extrémité supérieure de la cheminée 53, la paroi annulaire 55 s'étendant depuis la paroi cylindrique 54 vers l'intérieur de la cheminée 53 et comprenant un orifice central 56, présentant avantageusement un diamètre de l'ordre de 5 cm, permettant le passage de la vapeur.

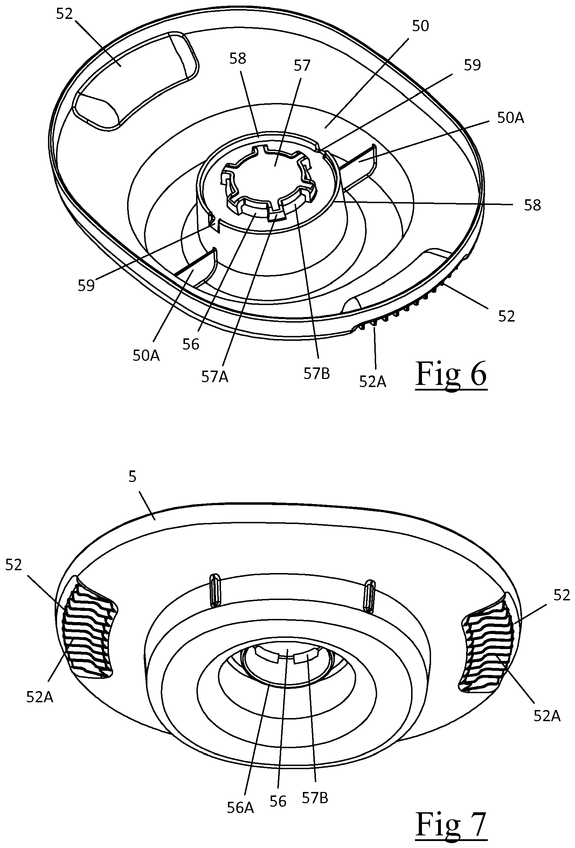

Conformément aux figures 4 et 6, la cheminée 53 comprend un cache 57 s'étendant au dessus de l'orifice central 56, le cache 57 étant relié à la paroi annulaire 55 par six pieds 57A régulièrement répartis en bordure de l'orifice central 56, les pieds 57A présentant une hauteur de l'ordre de 5 mm et ménageant entre eux des ouvertures radiales 57B pour le passage de la vapeur.

De manière préférentielle, la cheminée 53 comporte, en bordure de l'orifice central 56, une paroi tubulaire 56A s'étendant axialement à l'orifice central 56, à l'intérieur de la cheminée 53, sur une hauteur de l'ordre de 15 mm, la paroi tubulaire 56A interne présentant un diamètre identique à celui de l'orifice central 56 et présentant une extrémité inférieure venant dans l'alignement de l'ouverture 32 centrale du couvercle 3.

Comme on peut le voir sur la figure 6, la cheminée 53 comporte en regard de chaque poignée de préhension 52, une paroi déflectrice 58 pleine, s'élevant verticalement sur une hauteur de l'ordre de 5 mm depuis le bord de la paroi annulaire 55, les deux parois déflectrices 58 s'étendant sur un secteur angulaire légèrement inférieur à 180° de sorte qu'il résulte, entre les extrémités des parois déflectrices 58, un passage 59 présentant une largeur de l'ordre 7 mm.

De manière avantageuse, le bac 5 comprend également deux cloisons de séparation 50A planes qui s'étendent en travers de la cavité 50, de part et d'autre de la cheminée 53, les deux cloisons de séparation 50A s'étendant perpendiculairement à l'axe longitudinal du bac 5 et verticalement depuis le fond de la cavité 50 sur une hauteur de l'ordre 2 cm.

Conformément à la figure 7, le bac 5 comporte avantageusement, au niveau des poignées de préhension 52, de multiples nervures 52A en relief qui font saillies sur la face inférieure de la poignée de préhension 52 et qui sont séparées les unes des autres par une couche d'air.

Le fonctionnement de l'appareil va maintenant être décrit.

Lorsque l'utilisateur souhaite cuire des aliments à la vapeur à l'aide de l'appareil, il met de l'eau, ou une préparation liquide, dans le bol de mixage 2 de l'appareil, puis il place le couvercle 3 sur le bol de mixage 2 de l'appareil. L'accessoire 4 est ensuite posé sur le couvercle 3, ainsi que cela est illustré sur la figure 1, de telle sorte que la cheminée 53 du bac 5 vienne s'engager autour de la couronne 31, la paroi tubulaire 56A interne du bac 5 se trouvant alors alignée avec l'ouverture 32 centrale du couvercle 3.

L'utilisateur peut alors placer des premiers aliments à cuire dans le panier 6 et utiliser éventuellement le plateau 7 pour faire cuire d'autres aliments dans la partie supérieure du panier 6, sans que ces derniers ne soient au contact des premiers aliments. Une fois le panier 6 et/ou le plateau 7 fermé au moyen du couvercle de fermeture 8, l'utilisateur sélectionne sur l'appareil un programme permettant la cuisson à la vapeur.

La vapeur produite dans le bol de mixage 2 s'échappe alors par l'ouverture 32 du couvercle 3, puis au travers de la paroi tubulaire 56A avant d'être déviée par le cache 57 pour être diffusée par les ouvertures radiales 57B de la cheminée 53 en suivant le flux illustré par les flèches sur la figure 5. La vapeur est alors équitablement répartie sur la face inférieure du panier 6 et pénètre au travers de ce dernier par des trous ménagés dans le fond du panier 6, puis au travers de trous managés dans le fond du plateau 7, avant de s'échapper par deux ouvertures 80 ménagées dans le couvercle de fermeture 8.

Lors de la cuisson, les condensats se formant au contact des parois froides du panier 6 s'écoulent par gravité dans la cavité 50, évitant ainsi que ces derniers ne retournent dans le bol de mixage 2 et ne viennent polluer une préparation éventuelle en cours de réalisation.

Lorsque la cuisson à la vapeur est terminée, l'ensemble de l'accessoire 4 peut être soulevé en saisissant les poignées de préhension 52 de manière à amener l'accessoire 4 dans un évier, les nervures 52A présentes sous les poignées de préhension 52 agissant telles des ailettes de refroidissement et présentant l'avantage d'abaisser fortement la température au niveau de la zone de contact avec la main, évitant ainsi tout risque de brûlure.

Lors du déplacement de l'accessoire 4 par l'utilisateur, le liquide présent dans la cavité 50 a alors naturellement tendance à se déplacer d'une extrémité longitudinale à l'autre du bac 5, un tel déplacement du liquide étant toutefois freiné par la présence des cloisons de séparation 50A qui agissent comme un barrage s'opposant au déplacement du liquide.

Lorsque la quantité de liquide présent dans la cavité 50 est importante, il résulte malgré tout une partie du liquide qui se déplace longitudinalement en formant une vague qui vient heurter la cheminée 53 sur ses côtés faisant faces aux poignées de préhension 52, c'est-à-dire à l'endroit où la cheminée 53 présente les parois déflectrices 58. Les parois déflectrices 58, qui s'élèvent au dessus du niveau de la paroi annulaire 55, agissent alors comme des digues qui s'opposent au passage de liquide en direction de l'orifice central 56 de la cheminée 53.

Si du liquide parvient tout de même à passer au dessus la paroi déflectrice 58, les passages 59 disposés entre les deux parois déflectrices 58, et orientés transversalement à l'axe longitudinal du bac 5, permettent au liquide présent sur la paroi annulaire 55, et s'écoulant le long de la paroi déflectrice 58, de se déverser dans la cavité 50, réduisant ainsi le risque que ce dernier ne s'écoule au travers de l'orifice central 56 de la cheminée 53.

L'accessoire 4 ainsi réalisé présente donc l'avantage d'améliorer l'ergonomie d'utilisation de l'appareil, en limitant fortement le risque de brûlure de l'utilisateur lors de la manipulation du bac pour la récupération des condensats à la fin de la cuisson, que ce soit par contact avec les poignées de préhension du bac ou du fait de l'écoulement de condensats sur l'utilisateur par l'orifice central de la cheminée.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation non représentée, les parois déflectrices pourront ne s'étendre que sur un secteur angulaire plus réduit que celui illustré sur les figures, le long du pourtour de la cheminée.

Ainsi dans encore une autre variante de réalisation non présentée, les deux parois déflectrices pourront se rejoindre pour ne former qu'une paroi déflectrice faisant tout le tour de la cheminée, cette paroi déflectrice pouvant comporter, sur au moins l'un de ses côtés orienté transversalement aux poignées de préhension, une ouverture qui affleure la surface supérieure de la paroi annulaire pour former un passage permettant l'écoulement de liquide.

Ainsi, dans une autre variante de réalisation, le bac pourra être démuni de cloison de séparation dans le fond de la cavité et comprendre seulement des parois déflectrices au sommet de la cheminée, une telle variante présentant l'avantage d'être moins coûteuse à réaliser, tout en restant performante.

## Revendications

1. Accessoire (4) pour la cuisson à la vapeur comportant un bac (5) de récupération des condensats destiné à reposer sur un bol de mixage (2) d'un appareil électroménager comportant des moyens permettant de chauffer le contenu du bol de mixage (2), le bac (5) comprenant une cavité (50) pour la récupération des condensats et deux poignées de préhension (52) disposées symétriquement de part et d'autre de la cavité (50), la cavité (50) comprenant un fond comportant une cheminée (53) en saillie munie d'un orifice central (56) permettant le passage de la vapeur, ledit accessoire (4) comprenant également au moins un panier (6) pour la cuisson des aliments venant se positionner sur ledit bac (5), **caractérisé en ce que** la cheminée (53) comporte, à proximité de son extrémité supérieure, une paroi annulaire (55) s'étendant autour de l'orifice central (56) et transversalement à la cheminée (53), et **en ce que** la cheminée (53) comporte, en regard de chaque poignée de préhension (52), une paroi déflectrice (58) s'élevant au dessus du niveau de la paroi annulaire (55).

2. Accessoire (4) pour la cuisson à la vapeur selon la revendication 1, **caractérisé en ce que** la cheminée (53) comporte un cache (57) venant recouvrir au moins partiellement l'orifice central (56), ledit cache (57) étant supporté par des pieds (57A) ménageant entre eux des ouvertures radiales (57B) pour le passage de la vapeur.

3. Accessoire (4) pour la cuisson à la vapeur selon l'une quelconque des revendications 1 à 2, **caractérisé en ce que** ladite paroi déflectrice (58) s'étend le long du pourtour de la cheminée (53) sur un secteur angulaire α d'au moins 130°.

4. Accessoire (4) pour la cuisson à la vapeur selon l'une quelconque des revendications 1 à 3, **caractérisé en ce que** ladite paroi déflectrice (58) est disposée dans le prolongement vertical de la paroi cylindrique (54).

5. Accessoire (4) pour la cuisson à la vapeur selon l'une quelconque des revendications 1 à 4, **caractérisé en ce que** la paroi déflectrice (58) dépasse d'au moins 3 mm de la surface supérieure de la paroi annulaire (55) et préférentiellement de l'ordre de 5 mm.

6. Accessoire (4) pour la cuisson à la vapeur selon l'une quelconque des revendications 1 à 5, **caractérisé en ce qu'**il résulte entre les parois déflectrices (58) au moins un passage (59) permettant d'évacuer l'eau présente sur la surface supérieure de la paroi annulaire (55) vers la cavité (50).

7. Accessoire (4) pour la cuisson à la vapeur selon la revendication 6, **caractérisé en ce que** la cheminée (53) comprend deux passages (59) disposés symétriquement entres les parois déflectrices (58).

8. Accessoire (4) pour la cuisson à la vapeur selon l'une quelconque des revendications 1 à 7, **caractérisé en ce que** le bac (5) comprend au moins une cloison de séparation (50A) qui s'étend transversalement dans la cavité (50) pour faire barrage au déplacement du liquide dans la cavité.

9. Accessoire (4) pour la cuisson à la vapeur selon l'une quelconque des revendications 1 à 8, **caractérisé en ce que** les poignées de préhension (52) du bac comprennent une surface inférieure comportant plusieurs nervures (52A) en relief séparées les unes des autres par une pellicule d'air.

10. Appareil électroménager de préparation culinaire comportant un bol de mixage (2) recevant un outil de travail (20) entrainé en rotation par un moteur et comprenant un dispositif de chauffage permettant de chauffer le contenu du bol de mixage (2), **caractérisé en ce qu'**il comporte un accessoire (4) selon l'une quelconque des revendications 1 à 9.

## Patentansprüche

1. Zubehörteil (4) zum Dampfgaren, aufweisend eine Schale (5) zur Rückgewinnung von Kondensaten, die dazu bestimmt ist auf einer Rührschüssel (2) eines Haushaltsgerätes aufzuliegen, das Mittel aufweist, die es ermöglichen, den Inhalt der Rührschüssel (2) zu erhitzen, wobei die Schale (5) einen Hohlraum (50) zur Rückgewinnung von Kondensaten und zwei Haltegriffe (52) umfasst, die symmetrisch zu beiden Seiten des Hohlraums (50) angeordnet sind, wobei der Hohlraum (50) einen Boden aufweist, der einen hervorstehenden Abzug (53) aufweist, der mit einer zentralen Öffnung (56) versehen ist, die den Durchgang von Dampf ermöglicht, wobei das Zubehörteil (4) auch mindestens einen Korb (6) zum Garen von Speisen aufweist, der auf der Schale (5) positioniert ist, **dadurch gekennzeichnet, dass** der Abzug (53) in der Nähe von seinem oberen Ende eine ringförmige Wand (55) aufweist, die sich um die zentrale Öffnung (56) und quer zu dem Abzug (53) erstreckt, und dass der Abzug (53) gegenüber von jedem Haltegriff (52) eine Ablenkwand (58) aufweist, die sich über das Niveau der ringförmigen Wand (55) erhebt.

2. Zubehörteil (4) zum Dampfgaren nach Anspruch 1, **dadurch gekennzeichnet, dass** der Abzug (53) eine Abdeckung (57) aufweist, die zumindest teilweise die zentrale Öffnung (56) abdeckt, wobei die Abdeckung (57) durch Füße (57A) getragen wird, zwischen denen radiale Öffnungen (57B) für den Durchgang des Dampfs aufgenommen sind.

3. Zubehörteil (4) zum Dampfgaren nach einem der Ansprüche 1 bis 2, **dadurch gekennzeichnet, dass** die Ablenkplatte (58) sich entlang der Peripherie des Abzugs (53) über einen Winkelsektor α von mindestens 130° erstreckt.

4. Zubehörteil (4) zum Dampfgaren nach einem der Ansprüche 1 bis 3, **dadurch gekennzeichnet, dass** die Ablenkwand (58) in der vertikalen Verlängerung der zylindrischen Wand (54) angeordnet ist.

5. Zubehörteil (4) zum Dampfgaren nach einem der Ansprüche 1 bis 4, **dadurch gekennzeichnet, dass** die Ablenkwand (58) mindestens 3 mm über die obere Fläche der ringförmigen Wand (55) und vorzugsweise in der Größenordnung von 5 mm hervorsteht.

6. Zubehörteil (4) zum Dampfgaren nach einem der Ansprüche 1 bis 5, **dadurch gekennzeichnet, dass** zwischen den Ablenkwänden (58) mindestens ein Durchgang (59) vorgesehen ist, der es ermöglicht, das Wasser, das auf der oberen Fläche der ringförmigen Wand (55) vorhanden ist, zu dem Hohlraum (50) zu entleeren.

7. Zubehörteil (4) zum Dampfgaren nach Anspruch 6, **dadurch gekennzeichnet, dass** der Abzug (53) zwei Durchgänge (59) umfasst, die symmetrisch zwischen den Ablenkwänden (58) angeordnet sind.

8. Zubehörteil (4) zum Dampfgaren nach einem der Ansprüche 1 bis 7, **dadurch gekennzeichnet, dass** die Schale (5) mindestens eine Trennwand (50A) umfasst, die sich quer in den Hohlraum (50) erstreckt, um die Bewegung der Flüssigkeit in dem Hohlraum zu blockieren.

9. Zubehörteil (4) zum Dampfgaren nach einem der Ansprüche 1 bis 8, **dadurch gekennzeichnet, dass** die Haltegriffe (52) der Schale eine untere Fläche umfassen, die mehrere erhabene Rippen (52A) aufweist, die voneinander durch einen Luftfilm getrennt sind.

10. Elektrohaushaltsgerät zur Nahrungsmittelzubereitung, aufweisend eine Rührschüssel (2), die ein Arbeitswerkzeug (20) aufnimmt, das von einem Motor in Drehung versetzt wird, und aufweisend eine Heizvorrichtung, die es ermöglicht, den Inhalt der Rührschüssel (2) zu erhitzen, **dadurch gekennzeichnet, dass** es ein Zubehörteil (4) nach einem der Ansprüche 1 bis 9 aufweist.

## Claims

1. Accessory (4) for steam cooking comprising a tray (5) for recovering condensates intended to rest on a mixing bowl (2) of a household appliance comprising means for heating the contents of the mixing bowl (2), with the tray (5) comprising a cavity (50) for recovering condensates and two gripping handles (52) arranged symmetrically on either side of the cavity (50), with the cavity (50) comprising a bottom comprising a chimney (53) projection provided with a central orifice (56) allowing for the passage of steam, said accessory (4) also comprising at least one basket (6) for cooking food which is positioned on said tray (5), **characterised in that** the chimney (53) comprises, in the vicinity of the upper end thereof, an annular wall (55) extending around the central orifice (56) and transversally to the chimney (53), and **in that** the chimney (53) comprises, opposite each gripping handle (52), a deflecting wall (58) rising above the level of the annular wall (55).

2. Accessory (4) for steam cooking according to claim 1, **characterised in that** the chimney (53) comprises a cover (57) that covers at least partially the central orifice (56), said cover (57) being supported by feet (57A) arranging between them radial openings (57B) for the passage of steam.

3. Accessory (4) for steam cooking according to any of claims 1 to 2, **characterised in that** said deflecting wall (58) extends along the edge of the chimney (53) over an angular sector of at least 130°.

4. Accessory (4) for steam cooking according to any of claims 1 to 3, **characterised in that** said deflecting wall (58) is arranged in the vertical extension of the cylindrical wall (54).

5. Accessory (4) for steam cooking according to any of claims 1 to 4, **characterised in that** the deflecting wall (58) exceeds by at least 3 mm the upper surface of the annular wall (55) and preferably by about 5 mm.

6. Accessory (4) for steam cooking according to any of claims 1 to 5, **characterised in that** it results between the deflecting walls (58) at least one passage (59) that makes it possible to remove the water present on the upper surface from the annular wall (55) to the cavity (50).

7. Accessory (4) for steam cooking according to claim 6, **characterised in that** the chimney (53) comprises two passages (59) arranged symmetrically between the deflecting walls (58).

8. Accessory (4) for steam cooking according to any of claims 1 to 7, **characterised in that** the tray (5) comprises at least one separation partition (50A) which extends transversally in the cavity (50) in order to block the displacement of the liquid in the cavity.

9. Accessory (4) for steam cooking according to any of claims 1 to 8, **characterised in that** the gripping handles (52) of the tray include a lower surface comprising several ribs (52A) in relief separated from one another by a film of air.

10. Household appliance for cooking comprising a mixing bowl (2) receiving a working tool (20) driven in rotation by a motor and comprising a device for heating that makes it possible to heat the contents of the mixing bowl (2), **characterised in that** it comprises an accessory (4) according to any of claims 1 to 9.
